# EUROPEAN PATENT APPLICATION

(11) **EP 3 151 145 A1**
(43) Date of publication of application: **05.04.2017**
(21) Application number: 14878384.8
(22) Date of filing: 02.09.2014
(51) Int. Cl.: G06F 21/32

(54) **DETERMINATION METHOD AND SYSTEM OF MOBILE TERMINAL FOR IDENTIFYING USER PRIVILEGE BASED ON FINGERPRINT**

(30) Priority: 28.05.2014 CN 201410229939
(71) Applicant: Huizhou TCL Mobile Communication Co., Ltd., Hui Zhou Guangdong 516006 (CN)
(72) Inventor: CHEN, Xiling, HuiZhou, Guangdong 516006 (CN)
(74) Representative: Isarpatent
(86) International application number: PCT/CN2014/085748
(87) International publication number: WO 2015/180281

(57) **Abstract**

A determination method for identifying the user authority based on the fingerprints in a mobile terminal and a system employing the same are described. The method comprises the steps of collecting a user fingerprint to match the user fingerprint with fingerprint data pre-stored in a database; and acquiring user authority information correlated with the fingerprint data which is matched with the user fingerprint for providing a plurality of user authorities corresponding to the user fingerprint. The present invention employs the fingerprint identification to acquire the user authorities in order to reduce the improper operations, which increases the stability, is easier to be realized and decrease the cost.

## Description

### BACKGROUND OF THE INVENTION

### Field of Invention

The present invention relates to a technical field of a user authority configuration in a terminal, and more particularly to a determination method for identifying the user authority based on the fingerprints in a mobile terminal and system employing the same.

### Description of Prior Art

More and more applications and functions are employed in a mobile terminal, e.g. smartphone; meanwhile, the growing variety of messages and viruses attack the mobile terminal. People increasingly use the mobile terminal to make payments, to take the privacy photographs and to chat with friends along with the security issues. These issues include that the user's bank cards are unintentionally accessed by any other person, the privacy photographs are inadvertently seen by others, the chatting messages are accidently seen by any other person, and the child uses the smartphone to install or uninstall the Android package (APK). Although the smartphone can be locked to avoid the incorrect operations, however, the family members, friends or children may still make improper actions when the smartphone is in the unlocked status.

Conventionally, the user is able to configure the user accounts, e.g. a super administrator account, in the computer wherein each user account can have different authorities to protect the individual privacy in the computer. Thus, there is a need to establish the different user accounts with the distinctive authorities respectively in the smartphone and furthermore, it is required to identify the users corresponding to the authorities after the distinctive authorities are created, which are the serious problems to be solved without delay.

### SUMMARY OF THE INVENTION

One objective of the present invention is to provide a determination method for identifying the user authority based on the fingerprints in a mobile terminal and system employing the same to solve the problems of data unsafety caused by the conventional operations in the terminal equipment and the conventional comprehensive authority configuration.

The present invention solves the above problems by employing the following technical scheme.

A determination system for identifying a user authority based on fingerprints in a mobile terminal comprises a correlation module for correlating fingerprint data pre-stored in a database with user authority information; a matching unit, for collecting a user fingerprint to match the user fingerprint with the fingerprint data; and an authority-providing unit for acquiring the user authority information correlated with the fingerprint data which is matched with the user fingerprint and for providing a plurality of user authorities corresponding to the user fingerprint, wherein the user authorities comprise an administrator right, a basic function access right and a limited function access right.

Preferably, the determination system for identifying the user authority based on fingerprints in the mobile terminal of claim 1, wherein the matching unit comprises a matching sub-unit with the administrator right, for matching the user fingerprint with the fingerprint data which is correlated with the administrator right and pre-stored in the database, wherein if the user fingerprint is successfully matched with the fingerprint data, the authority-providing unit acquires a corresponding authority; a matching sub-unit with the basic function access right, for matching the user fingerprint with the fingerprint data which is correlated with the basic function access right and pre-stored in the database, wherein if the user fingerprint is successfully matched with the fingerprint data, the authority-providing unit acquires the user authorities corresponding to the user fingerprint; and a matching sub-unit with the limited function access right for checking whether a function access right exists or not based on the function access right corresponding to information of the limited function access right, wherein if yes, the function access right is provided, and if no, the function access right is retreated and the user is prompted not to be authorized for use.

Preferably, the mobile terminal is a smartphone.

The present invention solves the above-mentioned problems by employing the following technical scheme.

A determination method for identifying a user authority based on fingerprints in a mobile terminal comprises the following steps.

In the step A, a user fingerprint is collected to match the user fingerprint with fingerprint data pre-stored in a database.

In the step B, the user authority information is correlated with the fingerprint data which is matched with the user fingerprint is acquired for providing a plurality of user authorities corresponding to the user fingerprint.

Preferably, in the determination method for identifying the user authority based on fingerprints in the mobile terminal and before the step A, the fingerprint data is correlated with the user authority information in advance in the step A0.

Preferably, in the determination method for identifying the user authority based on fingerprints in the mobile terminal and during the step A0, the user fingerprint is collected and the user fingerprint is stored in the database in order to allocate authority information corresponding to the user fingerprint as an administrator right after the mobile terminal is turned on first in the step A01.

Preferably, in the determination method for identifying the user authority based on fingerprints in the mobile terminal, the user authorities comprise an administrator right, a basic function access right and a limited function access right.

Preferably, in the determination method for identifying the user authority based on fingerprints in the mobile terminal and during the step A of matching the user fingerprint with fingerprint data pre-stored in a database, the method further comprises the following steps.

In the step A11, the user fingerprint is matched with the fingerprint data which is correlated with the administrator right and pre-stored in the database, wherein if the user fingerprint is successfully matched with the fingerprint data, proceed to the step B, and if the user fingerprint is not matched with the fingerprint data, proceed to next step.

In the step A12, the user fingerprint is matched with the fingerprint data which is correlated with the basic function access right and pre-stored in the database, wherein if the user fingerprint is successfully matched with the fingerprint data, proceed to the step B, and if the user fingerprint is not matched with the fingerprint data, a limited function access right is acquired.

In the step A13, it is required to check whether a function access right exists or not based on the function access right corresponding to information of the limited function access right, wherein if yes, the function access right is provided, and if no, the function access right is retreated and the user is prompted not to be authorized for use.

A determination system for identifying a user authority based on fingerprints in a mobile terminal comprises a matching unit for collecting a user fingerprint to match the user fingerprint with fingerprint data pre-stored in a database; and an authority-providing unit for acquiring the user authority information correlated with the fingerprint data which is matched with the user fingerprint and for providing a plurality of user authorities.

Preferably, in the determination system for identifying the user authority based on fingerprints in the mobile terminal, the system further comprises a correlation module for correlating the fingerprint data with user authority information.

Preferably, in the determination system for identifying the user authority based on fingerprints in the mobile terminal, the user authorities comprise an administrator right, a basic function access right and a limited function access right.

Preferably, in the determination system for identifying the user authority based on fingerprints in the mobile terminal, wherein the matching unit for matching the user fingerprint with fingerprint data pre-stored in a database comprises the following sub-units.

A matching sub-unit with the administrator right is for matching the user fingerprint with the fingerprint data which is correlated with the administrator right and pre-stored in the database, wherein if the user fingerprint is successfully matched with the fingerprint data, the authority-providing unit acquires a corresponding authority, and if the user fingerprint is not matched with the fingerprint data, proceed to the next step.

A matching sub-unit with the basic function access right is for matching the user fingerprint with the fingerprint data which is correlated with the basic function access right and pre-stored in the database, wherein if the user fingerprint is successfully matched with the fingerprint data, the authority-providing unit acquires a corresponding authority, and if the user fingerprint is not matched with the fingerprint data, a limited function access right is acquired.

A matching sub-unit with the limited function access right is for checking whether a function access right exists or not based on the function access right corresponding to information of the limited function access right, wherein if yes, the function access right is provided, and if no, the function access right is retreated and the user is prompted not to be authorized for use.

Preferably, in the determination system for identifying the user authority based on fingerprints in the mobile terminal, the mobile terminal is a smartphone.

The present invention provide a determination method for identifying the user authority based on the fingerprints in a mobile terminal and system employing the same to solve the problems of data unsafety and inherent security risks caused by the conventional operations in the terminal equipment wherein the fingerprint identification technique is employed to recognize the fingerprints, determine the current user's identification and acquire the user authority corresponding to the current user's identification, which reduces the improper operations. Therefore, it is quite convenient for the user allocated to different user authorities to increase the utilization reliability of the terminal equipment and the implement method is simple to be manufactured by a lower cost. The user identification is easily realized and a limited function access right is provided for protection in order to implement the authority control.

### BRIEF DESCRIPTION OF THE DRAWINGS

FIG. 1 is a flow chart of a determination method for identifying the user authority based on the fingerprints in a mobile terminal according to one embodiment of the present invention; and

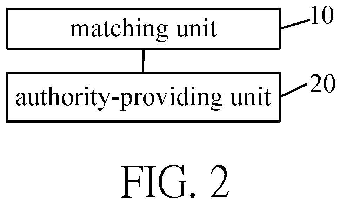

FIG. 2 is a schematic structural block diagram of a determination system for identifying the user authority based on the fingerprints in a mobile terminal according to one embodiment of the present invention.

### DETAILED DESCRIPTION OF THE PREFERRED EMBODIMENTS

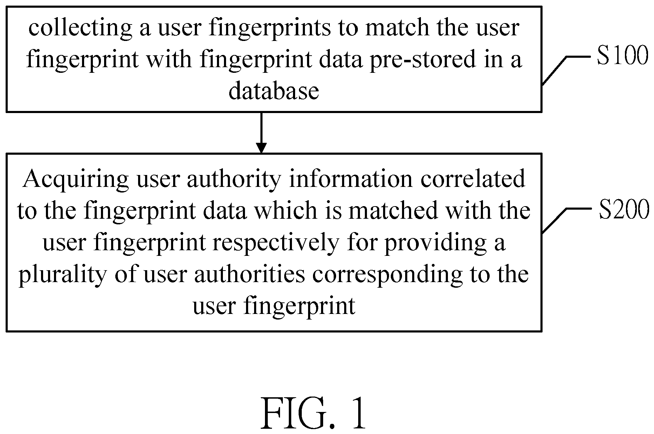

Refer to FIG. 1, which is a flow chart of a determination method for identifying the user authority based on the fingerprints in a mobile terminal according to one embodiment of the present invention. As shown in the FIG. 1, the method comprises the following steps.

In step S100, a user fingerprint is collected to match the user fingerprint with fingerprint data pre-stored in a database.

In step S200, the user authority information correlated with the fingerprint data which is matched with the user fingerprint is acquired in order to provide a plurality of user authorities corresponding to the user fingerprint.

The foregoing steps are described in details when taken in conjunction with the following embodiments.

The step S100 is that the user fingerprint is collected to match the user fingerprint with fingerprint data pre-stored in the database wherein the mobile terminal is a smartphone and a fingerprint sensor is installed on the smartphone to collect the fingerprint of the user. After the user fingerprint is collected, a fingerprint identification technique is utilized to recognize the user fingerprint. The fingerprint identification technique means that the different minutiae of the fingerprints are compared to make the identification procedure. Since each person's fingerprints are unique and each fingerprint of the fingers in the same person is also distinctive, therefore, the fingerprints can be served as the identity authentication. The fingerprint identification technique is widely applicable to a variety of equipments, which is a conventional art and thus and will not be elaborated here. To be brief, a dedicated fingerprint-collecting device is used to gather the fingerprint images. The fingerprint sensor disposed in the dedicated fingerprint-collecting device is classified as a swipe-type sensor and an area-type sensor based on the fingerprint collection manner and includes an optical type sensor, a pressure-sensitive type sensor, a capacitive type sensor, an inductive type sensor, a thermal type sensor and an ultrasonic type sensor based on the signal collection algorithm. A large amount of fingerprint data are compressed and stored, the fingerprint image is processed, the fingerprint region is detected, the image mass is identified, the direction pattern and frequency are evaluated, the image is enhanced, and the fingerprint image is binarized and refined. The feature message of the fingerprint is extracted from the fingerprint image after a pre-processed step wherein the feature message includes the parameters of category, coordinate and direction. A matching step of fingerprint feature is performed. The similarity between the extracted feature result and the pre-stored feature template is computed to complete the matching step of the fingerprint identification. Afterwards, the acquired fingerprint data is matched with the fingerprint data pre-stored in the database.

In the step S200, the user authority information correlated with the fingerprint data which is matched with the user fingerprint is acquired in order to provide a plurality of user authorities. Specifically, when the collected fingerprint is matched with one of the fingerprints pre-stored in the database, the user authority corresponding to the one fingerprint is regarded as the user authority of the collected fingerprint. In this embodiment, the user authorities comprise an administrator right, a basic function access right and a limited function access right. In particular, the administrator right permits the holder of the smartphone to install the APK, to automatically memorize the passwords of the bank accounts, WeChat and QQ which are the higher personal relevant applications, to configure the user authority, and to read the shorter message and telephone directories. The basic function access right permits the user to access some normal applications, to view photo albums and telephone directories, but not to memorize the passwords of the bank accounts, WeChat and QQ. The limited function access right restricts the user not to view the photo albums and telephone directories and also not to memorize the passwords of the bank accounts, WeChat and QQ. Certainly, the user authority corresponding to the specific functions can be configured based on the requirement, which is included within the scope of the present invention.

Furthermore, before the step S100, the fingerprint data of the user is correlated with the user authority information in advance to easily find the user authority information by way of the fingerprint data.

Further, the step of matching the user fingerprint with fingerprint data pre-stored in a database further comprises the following steps.

Firstly, the user fingerprint is matched with the fingerprint data which is correlated with the administrator right and pre-stored in the database wherein if the user fingerprint is successfully matched with the fingerprint data, the authority-providing unit acquires a corresponding authority, and if the user fingerprint is not matched with the fingerprint data, proceed to next step.

Afterwards, the user fingerprint is matched with the fingerprint data which is correlated with the basic function access right and pre-stored in the database wherein if the user fingerprint is successfully matched with the fingerprint data, the authority-providing unit acquires a corresponding authority, and if the user fingerprint is not matched with the fingerprint data, a limited function access right is acquired.

Then, it is required to check whether a function access right exists or not based on the access right corresponding to the information of the limited function access right, wherein if yes, the function access right is provided, and if no, the function access right is retreated and the user is prompted not to be authorized for use.

In the following embodiment, when the mobile terminal is a smartphone, the determination method for identifying the user authority based on fingerprints in the mobile terminal in the present invention is described to explain how to configure the user authorities.

After the smartphone is turned on first, the user fingerprint is collected and stored in the database in order to allocate the authority information corresponding to the user fingerprint as an administrator right, wherein the fingerprint data are stored to a background document, named as "administrator". Thus, the smartphone regards the person who provides the fingerprint as the holder of the smartphone by default wherein the person has the administrator right.

Moreover, the configuration menu of the smartphone comprises the administrator menu, the family member menu with the basic function access right and the stranger menu with the limited function access right for selection. In another case, the user is able to add a new mode to click a family member mode. The smartphone then starts the fingerprint-collecting device to collect the user fingerprint. Afterwards, the collected fingerprint is matched with the fingerprint data in the background document, i.e. "administrator". If the collected fingerprint is successfully matched with the fingerprint data, the user enters the family member mode. If the collected fingerprint is not matched with the fingerprint data, the user cannot enter the family member mode. Similarly, it is required to recognize the fingerprint for entering the stranger menu in order to ensure that only the administrator can configure various user rights.

When entering the family member mode, the fingerprint-collecting device starts to collect the user fingerprint and the collected fingerprint data is stored in the background document named as "family member 1". Another user fingerprint is also collected to be stored in the background document named as "family member 2". By analogy, a plurality of family members can be configured and the collected fingerprints of the family members are stored in the background document.

It should be noted that the smartphone pre-configures some user authority functions composed of APK installation and automatic password memorization of the bank accounts, WeChat and QQ, which are the higher personal relevant applications, to allow the user to configure the user authority and to read the shorter message and telephone directories. When the user enters the administrator menu, the family member menu and the stranger menu, the user is able to selectively configure different authorities on demand.

Based on the determination method for identifying the user authority based on the fingerprints in a mobile terminal, the present invention further set forth a determination system for identifying the user authority based on the fingerprints in a mobile terminal wherein the mobile terminal is preferably a smartphone. The system comprises a matching unit for collecting a user fingerprint to match the user fingerprint with fingerprint data pre-stored in a database; and an authority-providing unit for acquiring the user authority information correlated with the fingerprint data which is matched with the user fingerprint and for providing a plurality of user authorities corresponding to the user fingerprint.

Furthermore, the determination system for identifying the user authority based on fingerprints in the mobile terminal further comprises a correlation module for correlating the fingerprint data with user authority information.

Moreover, in the determination system for identifying the user authority based on fingerprints in the mobile terminal, the user authorities comprise an administrator right, a basic function access right and a limited function access right.

Further, the determination system for identifying the user authority based on fingerprints in the mobile terminal, the matching unit for matching the user fingerprint with fingerprint data pre-stored in a database comprises the following sub-units.

A matching sub-unit with the administrator right is for matching the user fingerprint with the fingerprint data which is correlated with the administrator right and pre-stored in the database, wherein if the user fingerprint is successfully matched with the fingerprint data, the authority-providing unit acquires a corresponding authority, and if the user fingerprint is not matched with the fingerprint data, proceed to next step.

A matching sub-unit with the basic function access right is for matching the user fingerprint with the fingerprint data which is correlated with the basic function access right and pre-stored in the database, wherein if the user fingerprint is successfully matched with the fingerprint data, the authority-providing unit acquires a corresponding authority, and if the user fingerprint is not matched with the fingerprint data, a limited function access right is acquired.

A matching sub-unit with the limited function access right is for checking whether a function access right exists or not based on the function access right corresponding to information of the limited function access right, wherein if yes, the function access right is provided, and if no, the function access right is retreated and the user is prompted not to be authorized for use.

The aforementioned units and sub-units are elaborated in the determination method for identifying the user authority based on fingerprints in the mobile terminal without repeating here.

According to the above-mentioned descriptions, the present invention provides a determination method for identifying the user authority based on the fingerprints in a mobile terminal and system employing the same. The determination method comprises the steps of firstly collecting a user fingerprint to match the user fingerprint with fingerprint data pre-stored in a database; and then acquiring user authority information correlated with the fingerprint data which is matched with the user fingerprint for providing a plurality of user authorities.

The present invention solves the problems of data unsafety and inherent security risks caused by the conventional operations in the terminal equipment wherein the fingerprint identification technique is employed to recognize the fingerprints, determine the current user's identification and acquire the user authority corresponding to the current user's identification, which reduces the improper operations. Therefore, it is quite convenient for the user allocated to different user authorities to increase the utilization reliability of the terminal equipment and the implement method is simple to be manufactured by a lower cost. The user identification is easily realized and a limited function access right is provided for protection in order to implement the authority control.

As is understood by a person skilled in the art, the foregoing preferred embodiments of the present invention are illustrative rather than limiting of the present invention. It is intended that they cover various modifications and similar arrangements be included within the spirit and scope of the present invention, the scope of which should be accorded the broadest interpretation so as to encompass all such modifications and similar structures.

## Claims

1. A determination system for identifying a user authority based on fingerprints in a mobile terminal, the determination system comprising:
a correlation module, for correlating fingerprint data pre-stored in a database with user authority information;
a matching unit, for collecting a user fingerprint to match the user fingerprint with the fingerprint data; and
an authority-providing unit, for acquiring the user authority information correlated with the fingerprint data which is matched with the user fingerprint and for providing a plurality of user authorities corresponding to the user fingerprint, wherein the user authorities comprise an administrator right, a basic function access right and a limited function access right.

2. The determination system for identifying the user authority based on fingerprints in the mobile terminal of claim 1, wherein the matching unit comprises:
a matching sub-unit with the administrator right, for matching the user fingerprint with the fingerprint data which is correlated with the administrator right and pre-stored in the database, wherein if the user fingerprint is successfully matched with the fingerprint data, the authority-providing unit acquires a corresponding authority;
a matching sub-unit with the basic function access right, for matching the user fingerprint with the fingerprint data which is correlated with the basic function access right and pre-stored in the database, wherein if the user fingerprint is successfully matched with the fingerprint data, the authority-providing unit acquires the user authorities corresponding to the user fingerprint; and
a matching sub-unit with the limited function access right, for checking whether a function access right exists or not based on the function access right corresponding to information of the limited function access right, wherein if yes, the function access right is provided, and if no, the function access right is retreated and the user is prompted not to be authorized.

3. The determination system for identifying the user authority based on fingerprints in the mobile terminal of claim 1, wherein the mobile terminal is a smartphone.

4. A determination method for identifying a user authority based on fingerprints in a mobile terminal, the determination method comprising the steps of:
collecting a user fingerprint to match the user fingerprint with fingerprint data pre-stored in a database; and
acquiring user authority information correlated with the fingerprint data which is matched with the user fingerprint for providing a plurality of user authorities corresponding to the user fingerprint.

5. The determination method for identifying the user authority based on fingerprints in the mobile terminal of claim 4, before the step of collecting the user fingerprint to match the user fingerprint with the fingerprint data pre-stored in the database, further comprising a step of correlating the fingerprint data with the user authority information in advance.

6. The determination method for identifying the user authority based on fingerprints in the mobile terminal of claim 5, during the step of correlating the fingerprint data with the user authority information in advance, further comprising:
collecting the user fingerprint and storing the user fingerprint in the database in order to allocate authority information corresponding to the user fingerprint as an administrator right after the mobile terminal is turned on first.

7. The determination method for identifying the user authority based on fingerprints in the mobile terminal of claim 4, wherein the user authorities comprise an administrator right, a basic function access right and a limited function access right.

8. The determination method for identifying the user authority based on fingerprints in the mobile terminal of claim 7, during the step of matching the user fingerprint with the fingerprint data pre-stored in a database, further comprising the steps of:
matching the user fingerprint with the fingerprint data which is correlated with the administrator right and pre-stored in the database, wherein if the user fingerprint is successfully matched with the fingerprint data, proceed to the step B, and if the user fingerprint is not matched with the fingerprint data, proceed to the next step;
matching the user fingerprint with the fingerprint data which is correlated with the basic function access right and pre-stored in the database, wherein if the user fingerprint is successfully matched with the fingerprint data, proceed to the step B, and if the user fingerprint is not matched with the fingerprint data, a limited function access right is acquired; and
checking whether a function access right exists or not based on the function access right corresponding to information of the limited function access right, wherein if yes, the function access right is provided, and if no, the function access right is retreated and the user is prompted not to be authorized.

9. A determination system for identifying a user authority based on fingerprints in a mobile terminal, the determination system comprising:
a matching unit, for collecting a user fingerprint to match the user fingerprint with fingerprint data pre-stored in a database; and
an authority-providing unit, for acquiring the user authority information correlated with the fingerprint data which is matched with the user fingerprint and for providing a plurality of user authorities corresponding to the user fingerprint.

10. The determination system for identifying the user authority based on fingerprints in the mobile terminal of claim 9, further comprising a correlation module, for correlating the fingerprint data with the user authority information.

11. The determination system for identifying the user authority based on fingerprints in the mobile terminal of claim 9, wherein the user authorities comprise an administrator right, a basic function access right and a limited function access right.

12. The determination system for identifying the user authority based on fingerprints in the mobile terminal of claim 9, wherein the matching unit for matching the user fingerprint with fingerprint data pre-stored in a database comprises:
a matching sub-unit with the administrator right, for matching the user fingerprint with the fingerprint data which is correlated with the administrator right and pre-stored in the database, wherein if the user fingerprint is successfully matched with the fingerprint data, the authority-providing unit acquires a corresponding authority, and if the user fingerprint is not matched with the fingerprint data, proceed to the next step;
a matching sub-unit with the basic function access right, for matching the user fingerprint with the fingerprint data which is correlated with the basic function access right and pre-stored in the database, wherein if the user fingerprint is successfully matched with the fingerprint data, the authority-providing unit acquires a corresponding authority, and if the user fingerprint is not matched with the fingerprint data, a limited function access right is acquired; and
a matching sub-unit with the limited function access right, for checking whether a function access right exists or not based on the function access right corresponding to information of the limited function access right, wherein if yes, the function access right is provided, and if no, the function access right is retreated and the user is prompted not to be authorized.

13. The determination system for identifying the user authority based on fingerprints in the mobile terminal of claim 9, wherein the mobile terminal is a smartphone.
